# EUROPEAN PATENT APPLICATION

(11) **EP 3 971 251 A1**
(43) Date of publication of application: **23.03.2022**
(21) Application number: 19928556.0
(22) Date of filing: 13.05.2019
(51) Int. Cl.: C09D 17/00, C09C 1/36, C09C 3/06, C09C 3/10, C09D 11/326

(54) **WHITE PIGMENT DISPERSION AND TECHNOLOGY RELATED THERETO**

(71) Applicant: Matsui Shikiso Chemical Co., Ltd., Kyoto-shi Kyoto 607-8345 (JP)
(72) Inventor: INOUE, Daisuke, Kyoto-shi Kyoto 607-8345 (JP); SHODAI, Hiroshi, Kyoto-shi Kyoto 607-8345 (JP); MIZUHARA, Tomohiro, Kyoto-shi Kyoto 607-8345 (JP)
(74) Representative: Weickmann & Weickmann PartmbB
(86) International application number: PCT/JP2019/018983
(87) International publication number: WO 2020/230246

(57) **Abstract**

Providing a white pigment dispersion that shows good storage stability because the white pigment contained therein is less likely to sediment, an ink composition comprising the white pigment dispersion, and a method of image formation using the ink composition.

A white pigment dispersion comprising at least a specified white pigment, a polymeric dispersant, and an aqueous liquid as a solvent or dispersion medium, wherein; the specified white pigment is a titanium dioxide that has been surface-treated with at least alumina, the polymeric dispersant has a structure with a principal chain having a pigment adsorption group and a water-soluble molecular chain grafted to the principal chain, the overall weight-average molecular weight of the polymeric dispersant is in the range of 2000 to 50000, the weight-average molecular weight of the graft chain is in the range of 150 to 3000, and the difference between the lightness value L of the coating film from the pre-centrifugation white pigment dispersion and the lightness value L of the coating film from the post-centrifugation supernatant liquid
is less than 25.

## Description

### [FIELD OF THE INVENTION]

The present invention relates to a white pigment dispersion that can be used to manufacture a white pigment ink and for other purposes, an ink composition comprising the white pigment dispersion, and a method of image formation using the ink composition.

### [BACKGROUND ART]

In recent years, aqueous inks each comprising an aqueous pigment dispersion are used to reduce environmental loads and for other purposes in coloring, printing, and writing on a wide variety of medium.

Such an aqueous pigment dispersion is obtained usually by mixing in water a pigment and a water-soluble anionic or nonionic surfactant having a hydrophilic group and an oleophilic group as a dispersing agent or a polymeric dispersant consisting of a particular monomer composition, and then finely dispersing the mixture, along with glass beads, zirconia beads, titania beads, stainless balls, or the like, using Atritor or a milling machine (Patent Gazette for Japanese Patent No. 4579966).

An ink that can be used for coloring, printing, writing, and other purposes is obtained by appropriately blending the resulting pigment dispersion with an agent that confers a desired function, such as a resin, as a binder, and the like.

However, in the case of a medium that is easily penetrable by the ink, such as paper or a fiber product, it is likely that masking of the medium with the ink is lacking, and that no clear image is obtained. Furthermore, when the medium has a color, an image, and the like, it is likely that the color, image, and the like appear through the image formed using the ink, and that no desired clear image is obtained.

As a solution to the problem that a desired clear image is difficult to obtain because of a lack of masking quality due to ink penetration or because of the color, image, and the like of the medium, a white ink for masking the medium is often used before using an ink for forming the desired image.

In this case, titanium dioxide is suitable for use as a pigment in the white ink from the viewpoint of masking performance; however, titanium dioxide is likely to sediment because of its high specific gravity, and inks based on titanium dioxide pose a problem of low stability over time. In particular, for an ink used for printing by an ink jet method, its viscosity is low at one ten-thousandth to one-thousandth compared with ordinary textile printing inks and the like; therefore, it is difficult to stably keep a dispersed state (Official Gazette for Japanese Patent No. 5647405).

For this reason, there is a demand for developing a white ink for use to form a masking layer or other white images or for other purposes, or a white pigment dispersion that can be used in the white ink and the like, which has a good storage stability because the white pigment contained is less likely to sediment.

### [PRIOR ART DOCUMENTS]

### [Patent Documents]

[Patent Document 1] Official Gazette for Japanese Patent No. 4579966
[Patent Document 2] Official Gazette for Japanese Patent No. 5647405

### [SUMMARY OF THE INVENTION]

### [PROBLEMS TO BE SOLVED BY THE INVENTION]

It is an object of the present invention to provide a white pigment dispersion that shows good storage stability because the white pigment contained therein is less likely to sediment, an ink composition comprising the white pigment dispersion, and a method of image formation using the ink composition.

### [MEANS OF SOLVING THE PROBLEMS]

The present inventors conducted extensive investigations to solve the above problems, found that it is possible to prepare a white pigment dispersion that shows good storage stability because the titanium dioxide contained therein is less likely to sediment, by using at least a titanium dioxide that has been surface-treated with alumina, a polymeric dispersant, and an aqueous liquid as a solvent or dispersion medium, and developed the present invention.

The present invention may be described, for example, as follows:
(1) A white pigment dispersion comprising at least a specified white pigment, a polymeric dispersant, and an aqueous liquid as a solvent or dispersion medium, wherein;
   the specified white pigment is a titanium dioxide that has been surface-treated with at least alumina,
   the polymeric dispersant has a structure with a principal chain having a pigment adsorption group and a water-soluble molecular chain grafted to the principal chain,
   the overall weight-average molecular weight of the polymeric dispersant is in the range of 2000 to 50000,
   the weight-average molecular weight of the graft chain is in the range of 150 to 3000, and the difference between
   the lightness value L of the coating film from the pre-centrifugation white pigment dispersion and
   the lightness value L of the coating film from the post-centrifugation supernatant liquid is less than 25.
(2) The white pigment dispersion as described in (1) above, wherein the zeta potential of the specified white pigment in the above-described aqueous liquid is positive.
(3) The white pigment dispersion as described in (1) or (2) above, wherein the content of the specified white pigment is 25% to 75% by weight, and the content of the polymeric dispersant is not more than 20% by weight relative to the specified white pigment.
(4) The white pigment dispersion as described in any one of (1) to (3) above, wherein the water-soluble molecular chain in the polymeric dispersant is a polyalkylene glycol chain.
(5) The white pigment dispersion as described in (4) above, wherein the polyalkylene glycol chain is a polyethylene glycol chain.
(6) The white pigment dispersion as described in any one of (1) to (5) above, wherein the principal chain of the polymeric dispersant has at least one kind selected from the group consisting of a carboxy group or a salt thereof, a sulfonic acid group or a salt thereof, and a phosphoric acid group or a salt thereof as the pigment adsorption group.
(7) The white pigment dispersion as described in any one of (1) to (6) above, wherein the acid value of the polymeric dispersant is not more than 400 mg KOH/g.
(8) An ink composition comprising at least the white pigment dispersion as described in any one of (1) to (7) above and a resin.
(9) The ink composition as described in (8) above, which is for ink jets.
(10) A method of image formation for forming an image by an ink jet method using the ink composition as described in (9) above.

### [ADVANTAGEOUS EFFECT OF THE INVENTION]

According to the present invention, a white pigment dispersion having good storage stability because the titanium dioxide contained as a white pigment therein is less likely to sediment, and an ink composition comprising the white pigment dispersion are obtained, and it is possible to form an image by an ink jet method using the ink composition.

### [MODES OF EMBODIMENT OF THE INVENTION]

Embodiments of the present invention are described below.

Any numeral appearing before or after "to" herein should be construed as representing a range of numerals that include the numerals before and after "to" as the upper limit value and lower limit value, respectively.

### (1) White pigment dispersion

The white pigment dispersion of the present invention comprises a white pigment dispersed in an aqueous liquid, and can be used to manufacture a white pigment ink or other pigment inks, and for other purposes.

The white pigment dispersion of the present invention comprises at least a specified white pigment, a polymeric dispersant, and an aqueous liquid as a solvent or dispersion medium.

The specified white pigment is a titanium dioxide that has been surface-treated with at least alumina, and is exemplified by a titanium dioxide that has been surface-treated with alumina, a titanium dioxide that has been surface-treated with alumina and silica, and a titanium dioxide that has been surface-treated with alumina and zirconia.

The polymeric dispersant has a structure comprising a principal chain having a pigment adsorption group, and a water-soluble molecular chain grafted to the principal chain, wherein the overall weight-average molecular weight is in the range of 2000 to 50000, and the weight-average molecular weight of the graft chain is in the range of 150 to 3000.

The white pigment dispersion of the present invention, by comprising such a specified white pigment and a polymeric dispersant, can improve the dispersion stability of the specified white pigment. Therefore, an ink composition comprising the white pigment dispersion can be obtained in a stable state in which the specified white pigment is less likely to sediment.

The difference between the lightness value L of the coating film from the pre-centrifugation white pigment dispersion and the lightness value L of the coating film from the post-centrifugation supernatant liquid is less than 25. A 10% by volume portion of the supernatant side (in the centrifugal center side) of the centrifuged white pigment dispersion is referred to as a supernatant liquid (containing specified white pigment particles).

### (1-1) Specified white pigment

The specified white pigment in the white pigment dispersion of the present invention, i.e., a titanium dioxide that has been surface-treated with at least alumina, can have a positive zeta potential in the aqueous liquid. The specified white pigment in the aqueous liquid exhibits an electrical affinity for a negatively charged pigment adsorption group present on the principal chain of the polymeric dispersant, and can be dispersed suitably in the aqueous liquid, as the zeta potential thereof is positive.

The content of a specified white pigment in the white pigment dispersion of the present invention (amount relative to the entire amount of the white pigment dispersion) is preferably 25% to 75% by weight, from the viewpoint of masking quality and dispersion stability. More preferably, the content is 30% to 70% by weight, still more preferably 40% to 60% by weight.

The titanium dioxide used in the specified white pigment may have any crystalline structure of the anatase type, brookite type, or rutile type, with preference given to a titanium dioxide having a crystalline structure of the rutile type, which offers high masking quality.

### (1-2) polymeric dispersant

The polymeric dispersant in the white pigment dispersion of the present invention, i.e., a polymeric dispersant having a structure with a principal chain having a pigment adsorption group (e.g., at least one kind selected from the group consisting of a carboxy group or a salt thereof, a sulfonic acid group or a salt thereof, and a phosphoric acid group or a salt thereof) and a water-soluble molecular chain (e.g., a polyalkylene glycol chain such as a polyethylene glycol) grafted to the principal chain, wherein the overall weight-average molecular weight is in the range of 2000 to 50000, and the weight-average molecular weight of the graft chain is in the range of 150 to 3000, is suitably used with an acid value of 20 to 400 mg KOH/g.

A polymeric dispersant in the white pigment dispersion of the present invention can be selected from among those capable of pigment dispersion, for example, a polymer consisting of an aliphatic vinyl monomer having an acid group, an aromatic or aliphatic vinyl monomer copolymerizable therewith, or the like, that has been neutralized with an alkaline substance.

Examples of the aliphatic vinyl monomer having an acid group include acrylic acid, methacrylic acid, itaconic acid, maleic acid, fumaric acid, methallylsulfonic acid, allylsulfonic acid, vinylsulfonic acid, styrenesulfonic acid, and 2-methacryloyloxyethyl acid phosphate (including anhydrides or salts thereof), which may be used alone or in combination of two kinds or more.

Examples of the aromatic vinyl monomer copolymerizable with an aliphatic vinyl monomer having an acid group include styrene, α-methylstyrene, and vinyltoluene, which may be used alone or in combination of two kinds or more.

Examples of the aliphatic vinyl monomer copolymerizable with an aliphatic vinyl monomer having an acid group, include
(meth)acrylate esters such as ethyl (meth)acrylate, propyl (meth)acrylate, butyl (meth)acrylate, pentyl (meth)acrylate, hexyl (meth)acrylate, heptyl (meth)acrylate, and 2-ethylhexyl (meth)acrylate;
vinylcarboxylic acid esters such as vinyl acetate, vinyl propionate, and vinyl butyrate;
alkyl vinyl ethers such as propyl vinyl ether and butyl vinyl ether; and
unsaturated hydrocarbons such as ethylene, propylene, and isobutene,
these may be used alone or in combination of two kinds or more.

When introducing a water-soluble molecular chain as a graft chain, it is possible to use a macromonomer with a polymerizable functional group attached to an end of the water-soluble molecular chain. Examples of such a macromonomer include polyalkylene glycols such as polyethylene glycol, and specific examples include, but are not limited to polyethylene glycol mono(meth)acrylate, polyethylene glycol monovinyl ether, polyethylene glycol monoallyl ether, polyethylene glycol monopropenyl ether, methoxy polyethylene glycol vinyl ether, and methoxy polyethylene glycol allyl ether.

The molecular weight of the polymeric dispersant can be adjusted using, for example, a chain transfer agent such as dodecyl mercaptan, mercaptopropionic acid, or α-methyl styrene dimer.

As a manufacturing method for the polymeric dispersant, any method, for example, bulk polymerization, solution polymerization, emulsification polymerization, or suspension polymerization, can be used, and can be chosen as appropriate according to the purpose, intended use, structural type, and the like of the polymeric dispersant. For the mechanism of polymerization thereof, methods of polymerization based on a mechanism such as radical polymerization, anion polymerization, cation polymerization, or coordination polymerization can be used, and various methods of living polymerization that allow precise control of molecular weight can also be used.

Any method of introducing a water-soluble molecular chain as a graft chain can be used, such as a method of copolymerization using a macromonomer with a polymerizable functional group attached to an end of the water-soluble molecular chain, a method wherein a principal chain is polymerized and then bound with the water-soluble molecular chain, or a method wherein the water-soluble molecular chain is elongated from a functional group bound to a principal chain.

The polymer thus obtained may be neutralized (into an aqueous solution) with an alkaline substance to obtain a polymeric dispersant in the white pigment dispersion of the present invention. Specific examples of the alkaline substance include ammonia; alkylamines such as trimethylamine and triethylamine; glycol amines such as diethanolamine and triethanolamine; cyclic amines such as morpholine and pyridine; and alkali metal hydroxides such as sodium hydroxide and potassium hydroxide.

The polymeric dispersant content in the white pigment dispersion of the present invention is preferably not more than 20% by weight relative to the specified white pigment contained by the white pigment dispersion. More preferably, the polymeric dispersant content in the white pigment dispersion of the present invention is 2% to 15% by weight, still more preferably 3% to 8% by weight, relative to the specified white pigment contained in the white pigment dispersion. However, the polymeric dispersant content may be in accordance with a specific combination of a polymeric dispersant and a specified white pigment.

### (1-3) Aqueous liquid

As an aqueous liquid as the solvent or dispersion medium in the white pigment dispersion of the present invention, water or a mixture of, for example, water and a water-soluble organic solvent may be used.

Examples of useful water-soluble organic solvents include, but are not limited to, glycols and glycerins that can function as wetting agents, such as ethylene glycol, diethylene glycol, triethylene glycol, propylene glycol, butylene glycol, polyethylene glycol, polypropylene glycol, glycerin, and diglycerin; and
water-soluble organic solvents that can function as surface tension, solubility, or drying speed adjusters, such as methanol, ethanol, n-propanol, isopropanol, n-butanol, isobutanol, t-butanol, 2-pyrrolidone, N-methyl-2-pyrrolidone, propylene glycol monomethyl ether, ethylene glycol mono ethyl ether, ethylene glycol monomethyl ether, methyl ethyl ketone, ethyl acetate, and ethylene glycol mono n-butyl ether. Such water-soluble organic solvents may be used alone or in combination of two kinds or more.

### (1-4) Preparation of a white pigment dispersion

The white pigment dispersion of the present invention can be obtained by, for example, mixing at least a specified white pigment (titanium dioxide that has been surface-treated with at least alumina), an aqueous liquid as a solvent or dispersion medium, and a polymeric dispersant, and subjecting the mixture to wet dispersion with glass beads, zirconia beads, titania beads, or the like using a milling machine (bead mill).

The white pigment dispersion of the present invention is preferably such that the average particle diameter of the specified white pigment contained therein is 200 to 300 nm, and the maximum particle diameter is not more than 1000 nm. In obtaining a white pigment ink composition capable of exhibiting a desired performance, it is suitable to use such a white pigment dispersion.

The white pigment dispersion of the present invention preferably comprises an antioxidant, ultraviolet absorber, defoaming agent, antiseptic antifungal agent, or the like as an additive for increasing the storage stability.

The content of an additive to increase the storage stability in the white pigment dispersion of the present invention (amount relative to the entire amount of the white pigment dispersion) is preferably not more than 5% by weight. More preferably, the content is not more than 1% by weight, still more preferably not more than 0.5% by weight.

(1-5) Difference between the lightness value L (a lightness value L in the Lab color system, which can be measured using, for example, the CR-300 Chroma Meter, manufactured by Konica Minolta, Inc.) of the coating film from the pre-centrifugation white pigment dispersion and the lightness value L of the coating film from the post-centrifugation supernatant liquid.

The difference between the lightness L value of the coating film formed with the pre-centrifugation white pigment dispersion of the present invention and the lightness L value of the coating film formed with the post-centrifugation supernatant liquid (value obtained by subtracting the lightness L value of the coating film formed with the post-centrifugation supernatant liquid from the lightness L value of the coating film formed with the pre-centrifugation white pigment dispersion) is less than 25, and the specified white pigment contained (titanium dioxide that has been surface-treated with at least alumina) is less likely to sediment so that the white pigment dispersion of the present invention has good storage stability. The coating film components other than the white pigment dispersion or the post-centrifugation supernatant liquid thereof can be used as they become colorless and transparent upon solidification.

This centrifugation can be performed by placing a white pigment dispersion in a centrifuge tube, and at a relative centrifugal acceleration rate of 150G for 30 minutes.

A coating film from the pre-centrifugation white pigment dispersion and a coating film from the post-centrifugation supernatant liquid can be obtained by coating and drying an ink prepared by blending the white pigment dispersion of the present invention with at least a resin, on a PET film using a bar coater.

### (2) Ink composition

The ink composition of the present invention comprises at least the white pigment dispersion of the present invention and a resin, and can be obtained by mixing them.

In addition, the ink composition of the present invention may comprise, as a coloring agent, a specified white pigment alone in the white pigment dispersion of the present invention, and may also comprise, as required, a white pigment other than the specified white pigment or other coloring agents such as pigments and dyes.

The ink composition of the present invention can be used for, for example, forming a masking layer (particularly a white masking layer), or forming an image or a letter, and the like in white or another color by printing using a printing machine such as an ink jet printer, and the like, and writing with a writing tool.

### (2-1) White pigment dispersion

The content of the white pigment dispersion of the present invention in the ink composition of the present invention may be, but is not limited to, an amount such that a specified white pigment is contained at 5% to 20% by weight in the white pigment dispersion, relative to the entire amount of the ink composition.

### (2-2) Resin

The resin used in the ink composition of the present invention is not subject to particular limitations; an appropriate resin may be chosen according to the intended use. Examples include acrylic resins, urethane resins, polyester resin, vinyl acetate resin, styrene resin, acrylic styrene resin, silicone resin, acrylic silicone resin, butadiene resin, styrene-butadiene resin, and vinyl chloride resin, whether they are of the water-soluble type, self-emulsifying type, or emulsion type. Resins may be used alone or in combination of two kinds or more.

### (2-2) Aqueous liquid

The ink composition of the present invention may comprise an aqueous liquid as a solvent or dispersion medium, in addition to an aqueous liquid as a solvent or dispersion medium in the white pigment dispersion of the present invention. As such an aqueous liquid, water or a mixture of, for example, water and a water-soluble organic solvent may be used.

Examples of useful water-soluble organic solvents include, but are not limited to, glycols and glycerins that can function as wetting agents, such as ethylene glycol, diethylene glycol, triethylene glycol, propylene glycol, butylene glycol, polyethylene glycol, polypropylene glycol, glycerin, and diglycerin; and
water-soluble organic solvents that can function as surface tension, solubility, or drying speed adjusters, such as methanol, ethanol, n-propanol, isopropanol, n-butanol, isobutanol, t-butanol, 2-pyrrolidone, N-methyl-2-pyrrolidone, propylene glycol monomethyl ether, ethylene glycol mono ethyl ether, ethylene glycol monomethyl ether, methyl ethyl ketone, ethyl acetate, and ethylene glycol mono n-butyl ether. Such water-soluble organic solvents can be chosen as appropriate according to the purpose, for example, ones that are identical to, or different from, the aqueous liquid in the white pigment dispersion of the present invention, and may be used alone or in combination of two kinds or more.

### (2-3) Additives and the like

The ink composition of the present invention may contain, as required, additives such as a crosslinking agent, plasticizer, surfactant, leveling agent, defoaming agent, antiseptic antifungal agent, ultraviolet absorber, antioxidant, and pH regulator for the purpose of improving the desired ink performance.

The additive content in the ink composition of the present invention (amount relative to the entire amount of the ink composition) is preferably not more than 5% by weight. More preferably, the content is not more than 1% by weight, still more preferably not more than 0.5% by weight.

### (3) Ink composition for ink jets

The ink composition of the present invention can be used as an ink for ink jets by adjusting as appropriate a resin, an aqueous liquid as a solvent or dispersion medium, additives such as a storage stabilizer, and the like.

The ink composition for ink jets of the present invention may be an ink composition for white ink jets comprising, as a coloring agent, a specified white pigment alone in the white pigment dispersion of the present invention, and may also comprise, as required, a white pigment other than the specified white pigment or other coloring agents such as pigments and dyes.

### (3-1) Resin

The resin in the ink composition for ink jets of the present invention is suitably a self-emulsifying type urethane resin having a hydrophilic group added to an end thereof, and emulsified in water by the hydrophilic group, to prevent head nozzle tip clogging.

A self-emulsifying type urethane resin has a finer particle diameter than the emulsion type, is less likely to cause film forming, is suitable for continuous printing using an ink jet printer, and has good long-term storage stability.

Particularly in the case of an ink composition for white ink jets, a self-emulsifying type urethane resin with an aliphatic or alicyclic isocyanate as a raw material is preferable in preventing the resulting white image (e.g., masking layer) from yellowing due to an influence of light, gaseous nitrogen oxide, and the like.

The content of a self-emulsifying type urethane resin in the ink composition for ink jets of the present invention (amount relative to the entire amount of the ink composition for ink jets) is preferably not more than 50% by weight from the viewpoint of fabric fastness such as water resistance, texture, and the like. More preferably, the content is not more than 30% by weight, still more preferably not more than 20% by weight.

### (3-2) Removal of coarse particles

It is preferable for suitability to printing using an ink jet printer that the ink composition for ink jets of the present invention have coarse particles 1 µm or more removed by filter filtration and the like.

### (4) Method of image formation

The method of image formation of the present invention is a method for forming an image (e.g., masking layer or other images) by an ink jet method using the ink composition for ink jets of the present invention.

### (4-1) Recording medium

Examples of the recording medium that is the subject of image formation by an ink jet method using the ink composition for ink jets of the present invention in the method of image formation of the present invention include, but are not limited to, penetrable media such as ordinary paper, glossy paper, special paper, textiles, knittings, non-woven fabrics, and other fabrics, and plastic films such as vinyl chloride resin films, PET films, polypropylene films, and polyethylene films.

Image formation by the method of image formation of the present invention can be performed, for example, on the entire portion or a required portion of the recording medium.

### (4-2) Ink jet printer

Image formation by an ink jet method using the ink composition for ink jets of the present invention, according to the method of image formation of the present invention, can be performed usually using an ink jet printer.

Examples of ink jet printers used for image formation by an ink jet method based on the ink composition for ink jets of the present invention include the electric charge control type based on electrostatic attraction for ink discharge, the drop-on-demand type (pressure pulse type) based on vibratory pressure of a piezoelectric element, acoustic ink jet type based on radiation pressure with an electric signal converted to an acoustic beam and applied to the ink, and thermal ink jet type based on pressure produced by heating the ink to form gas bubbles, with preference given to a printing machine of the drop-on-demand type.

Examples of such printing machines include, but are not limited to, EPSON PX-V700, EPSON PM-40000PX, Mimaki TX-1600S, FUJIFILM DMP-2831, and MASTERMIND MMP8130 (all are tradenames).

### (4-3) Pre-treatment step

The method of image formation of the present invention may have a pre-treatment step of previously applying a pre-treatment agent to the entire part or a required portion of a recording medium for image formation by an ink jet method using the ink composition for ink jets of the present invention.

Previously applying a pre-treatment agent to a recording medium can have effects, such as prevention of ink bleeding and penetration, improvement of fastness, and prevention of discoloration for inks for ink jets.

In this pre-treatment, a flocculant, crosslinking agent, antioxidant, ultraviolet absorber, and the like can be used as appropriate as pre-treatment agents, which may be used alone or in combination of two kinds or more.

Examples of methods of applying a pre-treatment agent to a recording medium include padding, coating, screen printing, spraying, or ink jetting, which can be chosen as appropriate according to the properties of the pre-treatment agent used and the recording medium.

After applying a pre-treatment agent to a recording medium, and while the recording medium is moistened with the pre-treatment agent, or after the recording medium is spontaneously dried or thermally dried, an image can be formed on the recording medium by an ink jet method using the ink composition for ink jets of the present invention.

The thermal drying can be performed by heating at least a pre-treated portion of the recording medium at 100 degrees C to 180 degrees C for 10 to 180 seconds, using, for example, a fan dryer, hot press machine, or the like.

### (4-4) Image heating step

The method of image formation of the present invention may comprise an image heating step of heating (e.g., at 100 degrees C to 220 degrees C for 1 to 10 minutes) the entire part or at least an image-formed portion of a recording medium with an image formed by an ink jet method using the ink composition for ink jets of the present invention.

### (4-5) Image formation

The method of image formation of the present invention may comprise a step for forming another image by an ink jet method on a portion or the entire part of an image formed by an ink jet method using the ink composition for ink jets of the present invention.

The base image for the formation of another image may be in a wet state or after spontaneous drying or thermal drying.

The base image may be formed with an ink composition for white ink jets comprising a specified white pigment alone as a coloring agent, which, however, is not to be construed as limiting.

The other image may be formed by, for example, printing with a color ink for ink jets, which, however, is not to be construed as limiting.

The method of image formation of the present invention may have a step of heating (e.g., at 100 degrees C to 220 degrees C for 1 to 10 minutes) a portion of the recording medium with at least the base image or the other image formed thereon after the other image has been formed.

### (4-6) Posttreatment step

The method of image formation of the present invention may have a post-treatment step of applying a post-treatment agent to the entire portion of a recording medium or at least a portion with an image formed by an ink jet method using the ink composition for ink jets of the present invention.

Examples of post-treatment agents include resins, crosslinking agents, plasticizers, surfactants, leveling agents, defoaming agents, antiseptic antifungal agents, ultraviolet absorbers, antioxidants, flame retardants, softening agents, water-repelling agents, and antistatic agents, which may be used alone or in combination of two kinds or more.

Examples of methods of applying a post-treatment agent include padding, coating, screen printing, spraying, or ink jetting, which can be chosen as appropriate according to the properties of the post-treatment agent used and the recording medium.

After applying a post-treatment agent, the entire portion of the recording medium or a portion to which a post-treatment agent has been applied may be heated (e.g., at 100 degrees C to 180 degrees C for 10 to 180 seconds).

### [EXAMPLES]

The present invention is hereinafter described in more detail by means of the following Examples, which, however, are not to be construed as limiting the present invention.

The term "part(s)" as used in the Examples and elsewhere means "part(s) by weight" unless otherwise stated.

The polymeric dispersants A to G used in Examples and Comparative Examples are shown in Table 1. Out of them the polymeric dispersants A to D, which were used in Examples, were obtained by a commonly known method of polymerization using monomers described in the composition field of the table, whereas E to G, which were used in Comparative Examples, are commercially available polymeric dispersants.

**[Table 1]**

| Dispersing agent | Composition (ratio by weight) | Average molecular weight (overall) | Average molecular weight of graft chain | Acid value |
|---|---|---|---|---|
| A | Polyethylene glycol monovinyl ether (95) Acrylic acid (5) | 22000 | 400 | 39 |
| B | Methoxy polyethylene glycol vinyl ether (83) Maleic anhydride (17) | 23000 | 400 | 195 |
| C | Methoxy polyethylene glycol allyl ether (95) Maleic anhydride (5) | 30000 | 1500 | 57 |
| D | Polyethylene glycol monopropenyl ether (87) Acrylic acid (7) Maleic acid (6) | 15000 | 2000 | 113 |
| E | Ammonium polyacrylate (commercial product) | 30000 | None | |
| F | Sodium polyacrylate (commercial product) | 3500 | None | |
| G | Acrylic acid - maleic acid copolymer sodium salt (commercial product) | 20000 | None | |

### White pigment dispersion 1

While stirring a mixture of 41 parts of water, 5 parts of glycerin, 3.5 parts of a dispersing agent A, and 0.5 parts of SN-DEFOAMER 777 (tradename of a defoaming agent manufactured by San Nopco Ltd.), 50 parts of a titanium dioxide that had been surface-treated with alumina (having a positive zeta potential) was added to the mixture, and the they were mixed with stirring.

The resulting mixture, along with zirconia beads 0.3 mm in diameter, was applied to a milling machine and dispersed for 1.5 hours.

Thereafter, the zirconia beads were removed to yield a white pigment dispersion 1 having an average particle diameter of 249 nm (measured using the UPA-150 dynamic light scattering particle analyzer, manufactured by MicrotracBEL Corporation).

### White pigment dispersion 2

As shown in Table 2, materials were treated in the same manner as with the white pigment dispersion 1, except that 5 parts of a dispersing agent B and 39.5 parts of water were used in place of 3.5 parts of the dispersing agent A and 41 parts of water, to yield a white pigment dispersion 2.

### White pigment dispersion 3

As shown in Table 2, materials were treated in the same manner as with the white pigment dispersion 1, except that 7.5 parts of a dispersing agent C and 37 parts of water were used in place of 3.5 parts of the dispersing agent A and 41 parts of water, to yield a white pigment dispersion 3.

### White pigment dispersions 4 and 6

As shown in Table 2, materials were treated in the same manner as with the white pigment dispersions 1 and 3, except that a titanium dioxide that had been surface-treated with alumina silica (having a positive zeta potential) was used in place of the titanium dioxide that had been surface-treated with alumina (having a positive zeta potential), to yield white pigment dispersions 4 and 6, respectively.

### White pigment dispersion 5

As shown in Table 2, materials were treated in the same manner as with the white pigment dispersion 2, except that a titanium dioxide that had been surface-treated with alumina silica (having a positive zeta potential) was used in place of the titanium dioxide that had been surface-treated with alumina (having a positive zeta potential), and that the dispersing agent B was replaced with a dispersing agent D, to yield a white pigment dispersion 5.

**[Table 2]**

| | White pigment dispersion | | | | | |
|---|---|---|---|---|---|---|
| | 1 | 2 | 3 | 4 | 5 | 6 |
| Water | 41.0 | 39.5 | 37.0 | 41.0 | 39.5 | 37.0 |
| Glycerin | 5.0 | 5.0 | 5.0 | 5.0 | 5.0 | 5.0 |
| Defoaming agent | 0.5 | 0.5 | 0.5 | 0.5 | 0.5 | 0.5 |
| Dispersing agent A | 3.5 | | | 3.5 | | |
| Dispersing agent B | | 5.0 | | | | |
| Dispersing agent C | | | 7.5 | | | 7.5 |
| Dispersing agent D | | | | | 5.0 | |
| Dispersing agent E | | | | | | |
| Dispersing agent F | | | | | | |
| Dispersing agent G | | | | | | |
| Titanium dioxide (alumina-treated, having a positive zeta potential) | 50.0 | 50.0 | 50.0 | | | |
| Titanium dioxide (alumina-and-silicatreated, having a positive zeta potential) | | | | 50.0 | 50.0 | 50.0 |
| Total | 100.0 | 100.0 | 100.0 | 100.0 | 100.0 | 100.0 |
| | | | | | | |
| Dispersion time (hours) | 1.5 | 1.5 | 1.5 | 1.5 | 1.0 | 1.0 |
| Average particle diameter (nm) | 249 | 253 | 228 | 238 | 224 | 241 |

### Preparing a resin liquid

An amount of 24.75 parts of water, 25 parts of propylene glycol, 50 parts of PERMARIN UA-300 (tradename of a urethane resin manufactured by Sanyo Chemical Industries, Ltd.), and 0.25 parts of BYK-348 (tradename of a surface tension regulator manufactured by BYK Japan K.K.) were mixed to prepare a resin liquid (which becomes colorless and transparent upon solidification).

### Example 1

An ink prepared by mixing 0.5 mL of white pigment dispersion 1 and 25 mL of the resin liquid was coated over a colorless transparent PET film using a bar coater No. 4, and the coated film was heated to dry the ink at 140 degrees C for 3 minutes to yield a coating film.

Separately, 10 mL of white pigment dispersion 1 was placed in a centrifuge tube and centrifuged at a relative centrifugal acceleration rate of 150 G for 30 minutes using a centrifuge (himac CR22N, tradename, manufactured by Hitachi Koki Co., Ltd.), after which 0.5 mL of a supernatant liquid was collected from a 10 % by volume portion of the supernatant side (centrifugal center side) thereof, and mixed with 25 mL of the resin liquid, and the resulting ink was coated in the same manner and heated in the same manner to yield a coating film.

For each of the resulting coating films, the lightness L value in the Lab color system was measured using a color difference meter (manufactured by Konica Minolta, Inc.; trade name, CR-300 Chroma Meter), and the lightness L value of a coating film from a pre-centrifugation white pigment dispersion 1 and the lightness L value of a coating film from a post-centrifuge supernatant liquid were compared. Their difference ΔE (value obtained by subtracting the lightness L value of the coating film formed with the post-centrifugation supernatant liquid from the lightness L value of the coating film formed with the pre-centrifugation white pigment dispersion 1) was less than 25 (less than 10), as shown in Table 3. Hence, the white pigment dispersion was shown to have good storage stability because of suppressed sedimentation of titanium dioxide.

### Examples 2 to 6

In Examples 2 to 6, white pigment dispersions 2 to 6, respectively, were treated in the same manner as Example 1, and lightness L values were measured in the same manner. The results are shown in Table 3. In all cases, the ΔE (value obtained by subtracting the lightness L value of the coating film formed with the post-centrifugation supernatant liquid from the lightness L value of the coating film formed with the pre-centrifugation white pigment dispersion) was less than 25 (less than 5 in Examples 2 and 3, less than 10 in Examples 4 and 6, less than 20 in Example 5); the white pigment dispersions were shown to have good storage stability because of suppressed sedimentation of titanium dioxide.

**[Table 3]**

| | Example 1 | Example 2 | Example 3 | Example 4 | Example 5 | Example 6 |
|---|---|---|---|---|---|---|
| White pigment dispersion | 1 | 2 | 3 | 4 | 5 | 6 |
| Pre-centrifugation value L | 82.61 | 82.38 | 83.22 | 82.54 | 82.98 | 82.16 |
| Post-centrilugation value L | 72.82 | 79.14 | 80.24 | 75.26 | 64.44 | 73.04 |
| ΔE | 9.79 | 3.24 | 2.98 | 7.28 | 18.54 | 9.12 |

### Example 7

A quantity of 22.7 parts of water, 10 parts of glycerin, 13 parts of ethylene glycol, 0.1 part of SN-DEFOAMER 777 (defoaming agent), 0.2 parts of BYK-348 (surface tension regulator), 33 parts of PERMARIN UA-300 (urethane resin), and 21 parts of white pigment dispersion 1 were mixed uniformly to yield a white pigment ink.

The resulting white pigment ink was filled in an ink jet printer MMP8130 manufactured by Mastermind K.K. and ink-jet-printed on a black cotton fabric, and the fabric was dried at 170 degrees C for 3 minutes, to yield a white image of good masking quality.

### Example 8

When the white pigment ink obtained in Example 7 was allowed to stand at room temperature for 1 week, neither separation nor sedimentation was observed.

When printing was performed in the same manner as Example 7 using the white pigment ink after being allowed to stand, the ink was stably discharged, and a white image of good masking quality was obtained in the same manner as Example 7.

### White pigment dispersion NG1

As shown in Table 4, materials were treated in the same manner as with the white pigment dispersion 1, except that 2 parts of a dispersing agent E and 42.5 parts of water were used in place of 3.5 parts of the dispersing agent A and 41 parts of water, to yield a white pigment dispersion NG1.

### White pigment dispersion NG2

As shown in Table 4, materials were treated in the same manner as with the white pigment dispersion 1, except that 2.5 parts of a dispersing agent F and 42 parts of water were used in place of 3.5 parts of the dispersing agent A and 41 parts of water, to yield a white pigment dispersion NG2.

### White pigment dispersion NG3

As shown in Table 4, materials were treated in the same manner as with the white pigment dispersion 4, except that 3 parts of a dispersing agent G and 41.5 parts of water were used in place of 3.5 parts of the dispersing agent A and 41 parts of water, and that a titanium dioxide that had been surface-treated with alumina silica (having a negative zeta potential) was used in place of the titanium dioxide that had been surface-treated with alumina silica (having a positive zeta potential), to yield a white pigment dispersion NG3.

### White pigment dispersion NG4

As shown in Table 4, materials were treated in the same manner as with the white pigment dispersion 4, except that 2.5 parts of dispersing agent A and 42 parts of water were used in place of 3.5 parts of the dispersing agent A and 41 parts of water, and that a titanium dioxide that had been surface-treated with alumina silica (having a negative zeta potential) was used in place of the titanium dioxide that had been surface-treated with alumina silica (having a positive zeta potential), to yield a white pigment dispersion NG4.

### Comparative Examples 1 to 4

In Comparative Examples 1 to 4, white pigment dispersions NG1 to NG4, respectively, were treated in the same manner as Example 1, and lightness L values were measured in the same manner. The results are shown in Table 4. In all cases, the ΔE (value obtained by subtracting the lightness L value of the coating film formed with the post-centrifugation supernatant liquid from the lightness L value of the coating film formed with the pre-centrifugation white pigment dispersion) exceeded 25 (not less than 27 in Comparative Examples 1 to 3, not less than 26 in Comparative Example 4); the white pigment dispersion lacked storage stability because of likely sedimentation of titanium dioxide.

**[Table 4]**

| | Comparative Example 1 | Comparative Example 2 | Comparative Example 3 | Comparative Example 4 |
|---|---|---|---|---|
| White pigment dispersion | NG1 | NG2 | NG3 | NG4 |
| Water | 42.5 | 42.0 | 41.5 | 42.0 |
| Glycerin | 5.0 | 5.0 | 5.0 | 5.0 |
| Defoaming agent | 0.5 | 0.5 | 0.5 | 0.5 |
| Dispersing agent A | | | | 2.5 |
| Dispersing agent B | | | | |
| Dispersing agent C | | | | |
| Dispersing agent D | | | | |
| Dispersing agent E | | | | |
| Dispersing agent F | 2.0 | 2.5 | | |
| Dispersing agent G | | | 3.0 | |
| Titanium dioxide (alumina-treated, having a positive zeta potential) | 50.0 | 50.0 | | |
| Titanium dioxide (alumina-and-silica-treated, having a negative zeta potential) | | | 50.0 | 50.0 |
| Total | 100.0 | 100.0 | 100.0 | 100.0 |
| | | | | |
| Dispersion time (hours) | 1.0 | 2.0 | 2.0 | 1.5 |
| Average particle diameter (nm) | 238 | 225 | 243 | 241 |
| | | | | |
| Pre-centrifugation value L | 80.22 | 79.61 | 80.17 | 80.48 |
| Post-centrifugation value L | 51.88 | 50.46 | 52.64 | 54.45 |
| ΔE | 28.34 | 29.15 | 27.53 | 26.03 |

### Comparative Example 5

Materials were treated in the same manner as Example 7, except that a white pigment dispersion NG3 was used in place of the white pigment dispersion 1, to yield a white pigment ink NG.

The resulting white pigment ink NG, just after its preparation, was filled in an ink jet printer MMP8130, the white pigment ink NG was ink-jet-printed on a black cotton fabric in the same manner as Example 7, and the fabric was dried at 170 degrees C for 3 minutes, to yield a white image of good masking quality.

However, when an attempt was made to fill white pigment ink NG that had been allowed to stand at room temperature for 1 week in the same manner as Example 8 in the MMP8130 ink jet printer and to perform printing in the same manner as Example 7, the ink was not normally discharged, and no white image was obtained.

## Claims

1. A white pigment dispersion comprising at least a specified white pigment, a polymeric dispersant, and an aqueous liquid as a solvent or dispersion medium, wherein;
the specified white pigment is a titanium dioxide that has been surface-treated with at least alumina,
the polymeric dispersant has a structure with a principal chain having a pigment adsorption group and a water-soluble molecular chain grafted to the principal chain,
the overall weight-average molecular weight of the polymeric dispersant is in the range of 2000 to 50000,
the weight-average molecular weight of the graft chain is in the range of 150 to 3000, and the difference between
the lightness value L of the coating film from the pre-centrifugation white pigment dispersion and
the lightness value L of the coating film from the post-centrifugation supernatant liquid is less than 25.

2. The white pigment dispersion as described in claim 1 above, wherein the zeta potential of the specified white pigment in the above-described aqueous liquid is positive.

3. The white pigment dispersion as described in claim 1 or 2 above, wherein the content of the specified white pigment is 25% to 75% by weight, and the content of the polymeric dispersant is not more than 20% by weight relative to the specified white pigment.

4. The white pigment dispersion as described in any one of claim 1 to 3 above, wherein the water-soluble molecular chain in the polymeric dispersant is a polyalkylene glycol chain.

5. The white pigment dispersion as described in claim 4 above, wherein the polyalkylene glycol chain is a polyethylene glycol chain.

6. The white pigment dispersion as described in any one of claim 1 to 5 above,
wherein the principal chain of the polymeric dispersant has at least one kind selected from the group consisting of a carboxy group or a salt thereof, a sulfonic acid group or a salt thereof,
and a phosphoric acid group or a salt thereof as the pigment adsorption group.

7. The white pigment dispersion as described in any one of claim 1 to 6 above,
wherein the acid value of the polymeric dispersant is not more than 400 mg KOH/g.

8. An ink composition comprising at least the white pigment dispersion as described in any one of claim 1 to 7 above and a resin.

9. The ink composition as described in claim 8 above, which is for ink jets.

10. A method of image formation for forming an image by an ink jet method using the ink composition as described in claim 9 above.
